# EUROPEAN PATENT APPLICATION

(11) **EP 4 235 581 A1**
(43) Date of publication of application: **30.08.2023**
(21) Application number: 23158602.5
(22) Date of filing: 24.02.2023
(51) Int. Cl.: G06T 11/00

(54) **MEDICAL IMAGE PROCESSING METHOD, MEDICAL IMAGE PROCESSING APPARATUS, PROGRAM, METHOD FOR PRODUCING A TRAINED MACHINE LEARNING MODEL, APPARATUS FOR PRODUCING A TRAINED MACHINE LEARNING MODEL AND COMPUTER-READABLE STORAGE MEDIUM**

(30) Priority: 25.02.2022 US 202217680873; 22.02.2023 JP 2023026447
(71) Applicant: Canon Medical Systems Corporation, Tochigi 324-0036 (JP)
(72) Inventor: DUTTA, Komal, Otawara-shi, 324-0036 (JP); MANAK, Joseph, Otawara-shi, 324-0036 (JP); HU, Yi, Otawara-shi, 324-0036 (JP); CHANG, Yu-bing, Otawara-shi, 324-0036 (JP); LU, Yujie, Otawara-shi, 324-0036 (JP); BAUMGART, John, Otawara-shi, 324-0036 (JP); HUA, Rui, Otawara-shi, 324-0036 (JP)
(74) Representative: Marks & Clerk LLP

(57) **Abstract**

A medical image processing method according to an embodiment is a medical image processing method of applying an X-ray image data (101) acquired by a first radiation apparatus (1300) to a trained machine learning model, and to outputting a high-quality X-ray image data (105) as a processed image. The machine learning model is generated by acquiring, based on 3D data (409) acquired by using a second radiation imaging apparatus (500), simulated projection image data (413) representative of when a object is imaged by the first radiation apparatus (1300) and the simulated data with degraded image quality, and applying a training process to an untrained machine learning model to produce the trained machine learning model by using the simulated projection data (413) and the simulated data with degraded image quality. The first radiation apparatus is an X-ray diagnosis apparatus comprising a C-arm. The second radiation apparatus is a CT (Computed Tomography) apparatus.

## Description

### FIELD

Embodiments described herein relate generally to a medical image processing method, a medical image processing apparatus, a program, a method for producing a trained machine learning model, an apparatus for producing a trained machine learning model, and a computer-readable storage medium.

### BACKGROUND

In X-ray imaging, such as cone beam computed tomography (CBCT), images can be degraded by several factors, such as noise, beam hardening, saturation, field of view truncation, metal artefacts, and cone beam artefacts, but especially scatter. Current techniques for noise correction and scatter correction often require a lot engineering effort for parameter tuning. Corrections processes can also be very slow, hard to implement, and produce inconsistent results.

### SUMMARY OF INVENTION

(1) A medical image processing method provided according to an aspect of the present invention includes a method for producing a trained machine learning model, the method comprising: generating, based on 3D training data of an object acquired by using a first radiation imaging apparatus, simulated projection data representative of when the object is imaged by a second radiation apparatus; and training an untrained machine learning model to produce the trained machine learning model by using the simulated projection data.
(2) The method according to (1), further comprising generating, based on the 3D training data, simulated scatter data representative of when the object is imaged by the second radiation apparatus, and, wherein the training of the untrained machine learning model comprises training the untrained machine learning model to produce the trained machine learning model by using the simulated scatter data and in addition to the simulated projection data.
(3) The method according to any one of (1)-(2), wherein the first radiation imaging apparatus is a computed tomography imaging apparatus, and the simulated projection data is simulated computed tomography projection data.
(4) The method according to (3), wherein the second radiation imaging apparatus is a cone beam computed tomography imaging apparatus and the simulated computed tomography projection data is simulated cone beam computed tomography projection data.
(5) A medical image processing apparatus provided according to an aspect of the present invention includes an apparatus for producing a trained machine learning model, the apparatus comprising: processing circuitry configured to: generate, based on 3D training data of an object acquired by using a first radiation imaging apparatus, simulated projection data representative of when the object is imaged by a second radiation apparatus; and train an untrained machine learning model to produce the trained machine learning model by using the simulated projection data.
(6) The apparatus according to (5), further comprising processing circuitry configured to generate, based on the 3D training data, simulated scatter data representative of when the object is imaged by the second radiation apparatus, and wherein the processing circuitry configured to train the untrained machine learning model comprises processing circuitry configured to train the untrained machine learning model to produce the trained machine learning model by using the simulated scatter data and the simulated projection data.
(7) The apparatus according to any one of (5)-(6), wherein the first radiation imaging apparatus is a computed tomography imaging apparatus, and the simulated projection data is simulated computed tomography projection data.
(8) The apparatus according to (7), wherein the second radiation imaging apparatus is a cone beam computed tomography imaging apparatus and the simulated computed tomography projection data is simulated cone beam computed tomography projection data.
(9) A medical image processing method provided according to an aspect of the present invention includes a method of processing target image data of a first object acquired by a first radiation apparatus, the method including, but not limited to: (a) receiving a trained machine learning model generated by: (a1) generating, based on 3D training data of a second object acquired by using a second radiation imaging apparatus, simulated projection data representative of when the second object is imaged by the first radiation apparatus; and (a2) applying a training process to an untrained machine learning model to produce the trained machine learning model by using the simulated projection data; and (b) applying the target image data to the trained machine learning model.
(10) The method according to (9), further comprising generating, based on the 3D training data, simulated scatter data representative of when the object is imaged by the first radiation apparatus, and wherein applying a training process to the untrained machine learning model comprises applying a training process to the untrained machine learning model to produce the trained machine learning model by using the simulated scatter data and the simulated projection data.
(11) The method according to any one of (9)-(10), wherein applying the target image data to the trained machine learning model includes, but is not limited to: applying saturation correction to the target image data to produce pre-processed image data; and applying the pre-processed image data to the trained machine learning model.
(12) The method according to any one of (9)-(11), wherein applying the target image data to the trained machine learning model includes, but is not limited to: applying truncation correction to the target image data to produce pre-processed image data; and applying the pre-processed image data to the trained machine learning model.
(13) The method according to any one of (9) to (12), wherein applying the target image data to the trained machine learning model comprises applying the target image data to the trained machine learning model to produce scatter corrected projection data, the method further including, but not limited to: performing reconstruction on the scatter corrected projection data to produce scatter corrected image data.
(14) The method according to (13), further comprising applying the scatter corrected image data to at least one noise reducing neural network to produce a noise reduced, scatter corrected image.
(15) The method according to any one of (9) to (14), wherein the first imaging apparatus comprises a cone beam computed tomography image apparatus, the method further comprising applying the scatter corrected image data to at least one cone beam artefact reducing neural network to produce an artefact reduced, scatter corrected image.
(16) A medical image processing apparatus provided according to an aspect of the present invention includes an apparatus for processing target image data of a first object acquired by a first radiation apparatus, the apparatus including, but not limited to, processing circuitry configured to implement the methods of any one of (9) to (15).
(17) A non-transitory computer-readable storage medium provided according to an aspect of the present invention stores computer-readable instructions that, when executed by a computer, cause the computer to perform the methods of any one of (1) to (4).
(18) A non-transitory computer-readable storage medium provided according to an aspect of the present invention stores computer-readable instructions that, when executed by a computer, cause the computer to perform the methods of any one of (9) to (15).
(19) A medical image processing method provided according to an aspect of the present invention is a medical image processing method of applying a target image data acquired by a first radiation apparatus to a trained machine learning model, the machine learning model being generated by
   generating, based on 3D training data acquired by using a second radiation imaging apparatus , simulated projection data representative of when imaged by the first radiation apparatus, and
   applying a training process to an untrained machine learning model to produce the trained machine learning model by using the simulated projection data.
(20) The method may further comprise generating, based on the 3D training data , simulated scatter data representative of when the object is imaged by the second radiation apparatus, wherein applying a training process to the untrained machine learning model comprises applying a training process to the untrained machine learning model to produce the trained machine learning model by using the simulated scatter data and the simulated projection data.
(21) Applying the target image data to the trained machine learning model may comprise:
   applying saturation correction to the target image data to produce pre-processed image data; and
   applying the pre-processed image data to the trained machine learning model.
(22) Applying the target image data to the trained machine learning model may comprise:
   applying truncation correction to the target image data to produce pre-processed image data; and
   applying the pre-processed image data to the trained machine learning model.
(23) Applying the target image data to the trained machine learning model may comprise applying the target image data to the trained machine learning model to produce scatter corrected projection data. The method may further comprise: performing reconstruction on the scatter corrected projection data to produce scatter corrected image data.
(24) The method may further comprise applying the scatter corrected image data to at least one noise reducing neural network to produce a noise reduced, scatter corrected image.
(25) The first radiation imaging apparatus may comprise a cone beam computed tomography image apparatus. The method may further comprise applying the scatter corrected image data to at least one cone beam artefact reducing neural network to produce an artefact reduced, scatter corrected image.
(26) The first radiation imaging apparatus is an X-ray diagnosis apparatus, the second radiation imaging apparatus is an X-ray CT (Computed tomography) apparatus; and the targeted image data may be image data corresponding to an image obtained by reconstructing a projection data acquired by rotating a C-arm by an X-ray diagnosis apparatus.
(27) A medical image processing apparatus provided according to aspect of the present invention comprises processing circuitry applying a target image data acquired by a first radiation imaging apparatus to a trained machine learning model, the trained machine learning model being generated by
   generating, based on 3D training data acquired by using a second radiation imaging apparatus, simulated projection data representative of when imaged by the first radiation apparatus, and
   applying a training process to an untrained machine learning model to produce the trained machine learning model by using the simulated projection data.
(28). A program provided according to an aspect of the present invention causes a computer to execute a process to apply a target image data acquired by a first radiation imaging apparatus to a trained machine learning model. The trained machine learning model is generated by generating, based on 3D training data acquired by using a second radiation imaging apparatus, simulated projection data representative of when imaged by the first radiation apparatus, and applying a training process to an untrained machine learning model to produce the trained machine learning model by using the simulated projection data.
(29) A medical image processing method provided according to an aspect of the present invention is a medical image processing method of applying an X-ray image data acquired by a first radiation apparatus to a trained machine learning model, and outputting a high-quality X-ray image data as a processed image. The machine learning model is generated by
   acquring, based on 3D data acquired by using a second radiation imaging apparatus, simulated projection image data representative of when a object is imaged by the first radiation apparatus and the simulated data with degraded image quality, and
   applying a training process to an untrained machine learning model to produce the trained machine learning model by using the simulated projection data and the simulated data with degraded image quality, wherein
      the first radiation apparatus is an X-ray diagnosis apparatus comprising a C-arm, and
      the second radiation apparatus is a CT (Computed Tomography) apparatus.
(30) The simulated data with degraded image quality may be simulated scatter data representative of when the object is imaged by the first radiation apparatus, the simulated data with degraded image quality being generated based on the 3D training data.
(31) The method may further comprise:
   applying the X-ray image data as an input to the trained machine learning model,
   acquiring scatter data of the X-ray image data as an output
   subtracting the scatter data from the X-ray image data to generate scatter corrected projection image data.
(32) Applying the X-ray image data to the trained machine learning model may comprise:
   applying saturation correction to the X-ray image data to produce pre-processed image data ; and
   applying the pre-processed image data to the trained machine learning model.
(33) Applying the X-ray image data to the trained machine learning model may comprise:
   applying truncation correction to the X-ray image data to produce pre-processed image data; and
   applying the pre-processed image data to the trained machine learning model.
(34) Applying the X-ray image data to the trained machine learning model may comprise applying the X-ray image data to the trained machine learning model to produce scatter corrected projection data, the method further comprising: performing reconstruction on the scatter corrected projection data to produce scatter corrected image data.
(35) The method may further comprise applying the scatter corrected image data to at least one noise reducing neural network to produce a noise reduced, scatter corrected image.
(36) The method may further comprise applying the scatter corrected image data to at least one cone beam artefact reducing neural network to produce an artefact reduced, scatter corrected image.
(37) The X-ray image data may be image data corresponding to an image obtained by reconstructing a projection data acquired by the X-ray diagnosis apparatus comprising the C-arm.
(38) Simulation representative of when the object is imaged by the first radiation imaging apparatus may be simulation simulating an imaging of the object by an imaging geometry of the first radiation imaging apparatus, by using Monte Carlo calculation or deterministic method of RTE(Radiative Transfer Equation).
(39) A medical image processing apparatus according to an aspect of the present invention comprises processing circuitry applying an X-ray image data acquired by a first radiation imaging apparatus to a trained machine learning model and outputting a high-quality X-ray image data as a processed image. The trained machine learning model is generated by
   acquiring, based on 3D data acquired by using a second radiation imaging apparatus , simulated projection image data representative of when a object is imaged by the first radiation apparatus and simulated data with degraded image quality representative of when imaged by the first radiation imaging apparatus, and
   applying a training process to an untrained machine learning model to produce the trained machine learning model by using the simulated projection data the simulated data with degraded image quality, wherein
      the first radiation imaging apparatus is an X-ray diagnosis apparatus comprising a C-arm and
      the second radiation imaging apparatus is an X-ray CT apparatus (Computed Tomography) apparatus.
(40) A program provided according to an aspect of the present invention causes a computer to execute a process to apply an X-ray image data acquired by a first radiation imaging apparatus to a trained machine learning model and to output a high-quality X-ray image data as a processed image, the trained machine learning model being generated by
   acquiring, based on 3D data acquired by using a second radiation imaging apparatus , simulated projection image data representative of when a object is imaged by the first radiation apparatus and simulated data with degraded image quality representative of when imaged by the first radiation imaging apparatus, and
   applying a training process to an untrained machine learning model to produce the trained machine learning model by using the simulated projection image data and the simulated data with degraded image quality, wherein the first radiation imaging apparatus is an X-ray diagnosis apparatus comprising a C-arm and
   the second radiation imaging apparatus is an X-ray CT apparatus (Computed Tomography) apparatus.
(41) The simulated data with degraded image quality imaged by the first radiation imaging apparatus may be degrade by at least one of scatter data, noise, saturation and truncation.
(42) The trained machine learning model may be a neural network.
(43) The trained machine learning model may be a U-net.
(44) The trained machine learning model may take the target image data as input.

### BRIEF DESCRIPTION OF THE DRAWINGS

FIG. 1 illustrates a workflow for a method generating a trained machine learning model that reduces the effect of scatter X-rays by training the model with simulated projection data and simulated scatter data, according to one embodiment of the present disclosure.
FIG. 2 illustrates a workflow for a method of generating a high quality X-ray image using saturation correction, truncation correction, scatter correction, noise reduction, and artefact reduction, according to one embodiment of the present disclosure.
FIG. 3 illustrates a workflow for training and utilizing a neural network for saturation correction, according to one embodiment of the present disclosure.
FIG. 4 illustrates a workflow for training and utilizing a neural network for truncation correction, according to one embodiment of the present disclosure.
FIG. 5 illustrates a workflow for training and utilizing a neural network for scatter correction, according to one embodiment of the present disclosure.
FIG. 6 illustrates a workflow for training and utilizing a neural network for noise reduction, according to one embodiment of the present disclosure.
FIG. 7 illustrates a workflow for training and utilizing a neural network for cone beam artefact reduction, according to one embodiment of the present disclosure.
FIG. 8 illustrates a workflow for training and utilizing a neural network for saturation and truncation correction, according to one embodiment of the present disclosure.
FIG. 9 illustrates a workflow for training and utilizing a neural network for noise and cone beam artefact reduction, according to one embodiment of the present disclosure.
FIG. 10 illustrates a workflow for anatomical-based saturation correction, truncation correction, scatter correction, noise reduction, and cone beam artefact reduction by utilizing respective coefficient libraries, according to one embodiment of the present disclosure.
FIG. 11 is a flowchart of a method for generating a high quality image, according to one embodiment of the present disclosure.
FIG. 12 illustrates a computed tomography (CT) system, according to one embodiment of the present disclosure.
FIG. 13 illustrates an example of an X-ray diagnosis apparatus according to one embodiment of the present disclosure.

### DETAILED DESCRIPTION

Embodiments of the present invention will be described below with reference to drawings. The same numerals are assigned for the same structure and duplication explanation thereof is omitted.

### (Embodiment)

With references to drawings, embodiments of medical image processing methods, medical image processing apparatus and programs are explained in detail.

The apparatuses and methods described herein are provided as non-limiting example implementations of the present disclosure. As will be understood by those skilled in the art, the present disclosure may be embodied in other specific forms without departing from the spirit or essential characteristics thereof. Accordingly, the detailed description is intended to be illustrative, but not limiting of the scope of the disclosure. The disclosure, including any readily discernible variants of the teachings herein, defines, in part, the scope of the foregoing claim terminology such that no inventive subject matter is dedicated to the public.

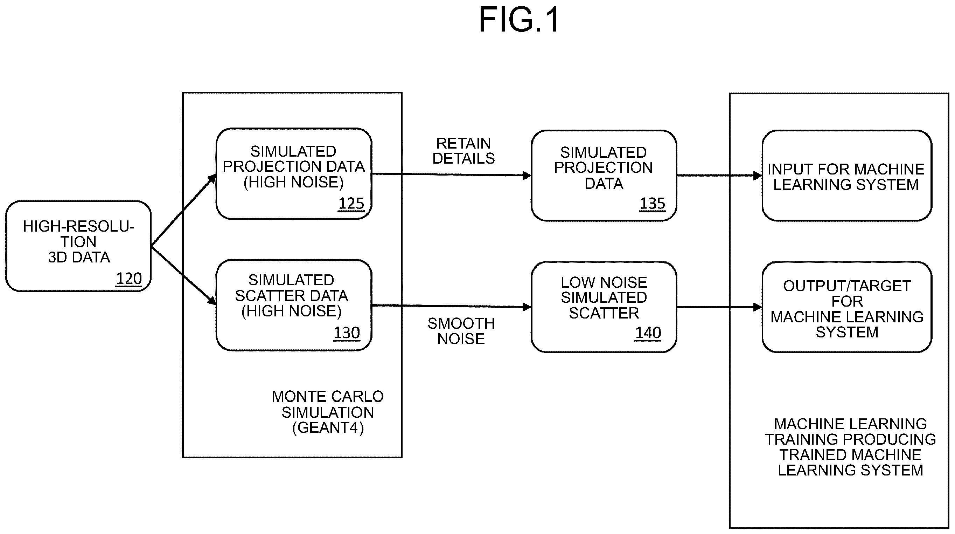

The present disclosure is related to deep learning based image reconstruction for a medical imaging apparatus including, but not limited to cone beam CT imaging apparatuses. Multiple deep learning based models can be optimized for correcting different types of image degradation, such as noise, saturation, truncation, and artefacts, but especially scatter. In a projection domain, an intensity of scatter can reach an order of magnitude higher than an intensity of a primary signal. While collimator, bow-tie filter and anti-scatter grids can help to reduce scatter intensity, the scatter intensity can still be on the same order of magnitude as the primary signal. In some cases, reconstructed images, therefore, can contain significant inhomogeneity and quantification errors. In order to reduce the effect of scatter, in addition to or in place of hardware (e.g., a patient-side collimator and/or bow-tie filter and/or a detector-side anti-scatter grid), techniques described herein apply a trained machine learning system (e.g., a neural network) to an x-ray image. While known software technics for scatter correction include scatter removal in projection domain (e.g., such as (1) a double gaussian shaped filter method and (2) iterative image domain scatter-related artefact corrections), such software techniques may be time consuming. As described herein, an off-line training process (e.g., as illustrated in FIG. 1) can be performed to train at least one machine learning system (e.g., a deep learning neural network) to predict the scatter profile for each projection view at different angles for subtraction.

In one embodiment, numerous sets of different 3D/volume data 120 can be acquired from phantoms and clinical sites and can be used to generate the synthetic pair of projection images and scatter images. The obtained data can be, for example, clinical head data or abdomen data and is from a 3D imaging source such as a computed tomography imaging apparatus. The obtained data may be either data obtained in the presence or absence of a contrast agent and may be a combination of both.

Training data (e.g., simulated high noise projection data 125 using the volume data 120) can then be obtained from Monte Carlo simulation by GEANT4, but other sources of training data are possible as well. The training data is generated to be projection data representative of when the object is imaged by a radiation apparatus that may not be the same kind as the 3D imaging source on which the volume data 120 was obtained. For each volume, numerous sets (e.g., 50-300) of various-angle data can be simulated. Such a simulation can be done either serially or in parallel (e.g., using plural CPU cores from a computational server farm or a multi-processor system). The simulated data can be simulated for configurations with or without an anti-scatter grid (ASG). For simulations for configurations with an ASG, simulated scatters can be generated that are limited to the scatters caused by the object which depend on its materials. In those cases, only scatters from object volume are extracted and scatters from the ASG need not be included. Alternatively, scatters from the ASG also can be included.

In one embodiment, to reduce the time required for the Monte Carlo simulation(s), limited photon numbers can be applied for each view in the simulation for the consideration of computational efficiency. Given that the scatter profiles 130 change slowly along space and are not sensitive to small details in the phantom or patient, a strong gaussian filter can be applied to smooth out the simulated scatter images (to produce low noise simulated scatter data 140) before training. Although some pre-processing of the simulated high noise projection data 125 can be performed to produce the training simulated projection data 135, in a preferred embodiment, the strong gaussian filter applied to smooth out the simulated scatter images (to produce low noise simulated scatter data 140) is not applied to the simulated high noise projection data 125 in order to retain image quality.

In addition, for training data creation, calculation of the scatter profile data 140 based on deterministic solution of the radiative transfer equation (RTE) can be used in addition to the Monte Carlo calculation. In order to increase an amount of data available for training, an initial training set is augmented/enlarged by at least one of interpolating between views and rotating pieces of data to produce additional training data. In one embodiment, separate training data is produced based on contrast and non-contrast volume data, and the separate training data is used to train networks specific to whether or not a contrast agent was present when the volume data was acquired. In another embodiment, training data for a single network is produced from volume data obtained by imaging both with and without the presence of a contrast agent.

In one configuration, a machine learning system in the form of a modified U-net is used, and the number of inputs, hidden layers and output layers can be varied based on the complexity of the network needed to model the scattering and may even be changed according to the various views/angles to be processed. The training simulated projection data 135 is used as an input to train the machine learning system, and the scatter profile data 140 is used as an output/target while training the machine learning system. The projection/image information may also be downsampled by the network, such as by reducing an initial image (e.g., 1024 x 1024 pixel ) to a smaller scale image (e.g., 256 x 256) and later upsampled to again conform to the original image size. In the same network or in a different network or process, the original data also may be scaled to a proper intensity level (e.g., through a normalization process). Moreover, while much of the discussion herein will be based on applying a training process to projection domain (2D) data, scatter correction using a trained machine learning based method and system also can be applied to image domain (3D) data and/or sinogram domain data, where the simulated reconstructed image or sinogram without scatter can be used as training target/desired result and the reconstructed data (sinogram) with scatter is used as the training input.

In one embodiment discussed herein, the trained machine learning model generated to reduce the effect of scatter X-rays is trained using data generated from high resolution 3D projection/image data from a computed tomography (CT) system but is used to correct projection data from a cone beam computed tomography (CBCT) system on a projection view-by-projection view basis.

In other words, the medical image processing method according to an embodiment is a medical image processing method of applying a target image data acquired by a first radiation apparatus to a trained machine learning model. The machine learning model is generated by generating, based on 3D training data acquired by using a second radiation imaging apparatus, simulated projection data representative of when imaged by the first radiation apparatus, and applying a training process to an untrained machine learning model to produce the trained machine learning model by using the simulated projection data.

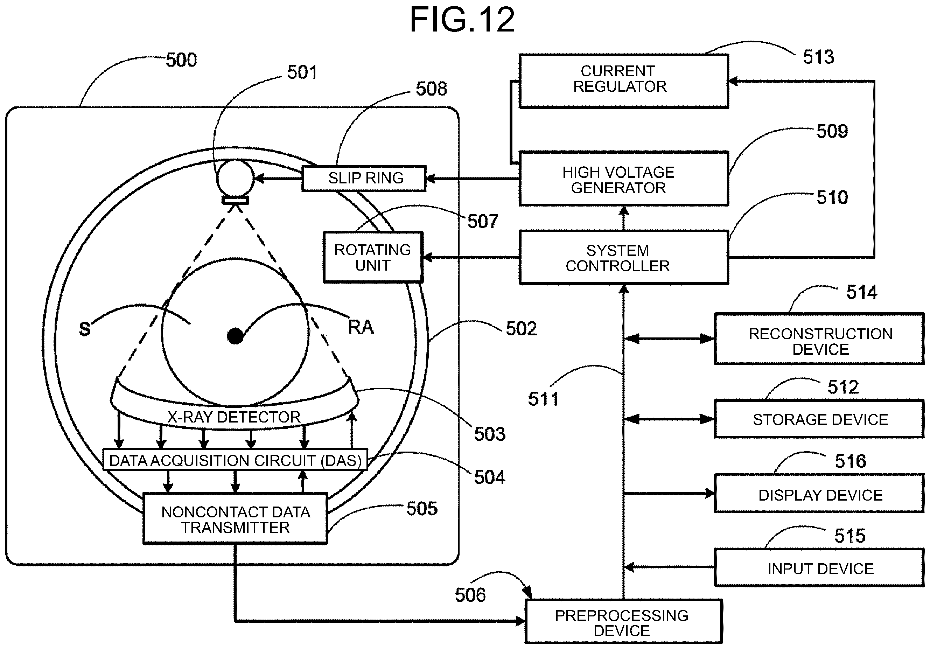

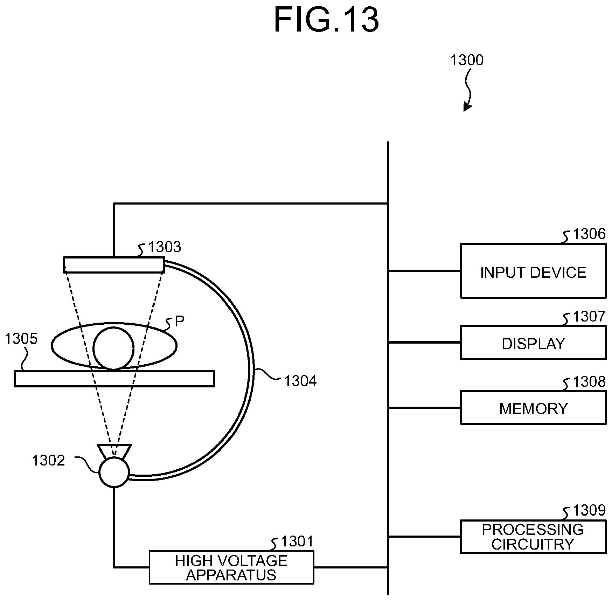

The first radiation imaging apparatus is, for example, an X-ray diagnosis apparatus as illustrated in FIG. 13 and executes a CBCT scan that is the first scan. On the other hand, the second radiation imaging apparatus is an X-ray CT (Computed tomography) apparatus as illustrated in FIG. 12 and generates a 3D training data by performing a CT scan that is a second scan.

Further, a medical image processing apparatus according to an embodiment comprises processing circuitry applying a target image data acquired by a first radiation imaging apparatus to a trained machine learning model. The trained machine learning model is generated by generating, based on 3D training data acquired by using a second radiation imaging apparatus, simulated projection data representative of when imaged by the first radiation apparatus, and applying a training process to an untrained machine learning model to produce the trained machine learning model by using the simulated projection data. The processing circuitry 609 as shown in FIG. 13 is an example of the processing circuitry applying the target image data. Further, the reconstruction device 514 as shown in FIG. 12 may be an example of the processing circuitry applying the target image data. Further, a program according to an embodiment causes a computer to execute a process to apply the target image data acquired by the first radiation imaging apparatus to the trained machine learning model.

In addition to the scatter correction applied by the machine learning system, the machine learning system (or an additional network to which the output of the machine learning system is applied) can perform additional types of corrections on the projection data applied to the machine learning system. As described in portions of this disclosure, the additional corrections (e.g., saturation correction, truncation correction, noise reduction, and artefact removal) are applied by one or more additional networks, but a combined system also is possible that combines any one of or any combination of scatter correction, saturation correction, truncation correction, noise reduction, and artefact removal.

A first set of one or more neural networks can be trained for correcting saturation and/or truncation in the projection domain of a data set (e.g., a CBCT dataset), and a second set of one or more neural networks can be trained for reducing noise and artefacts of the CBCT dataset, after reconstruction, in the image domain. The training process can include simulating degradations on high quality datasets via simulation to produce training pairs. Alternatively, real degradation data from other at least one other source (e.g., a noise source) can be applied to the datasets before training.

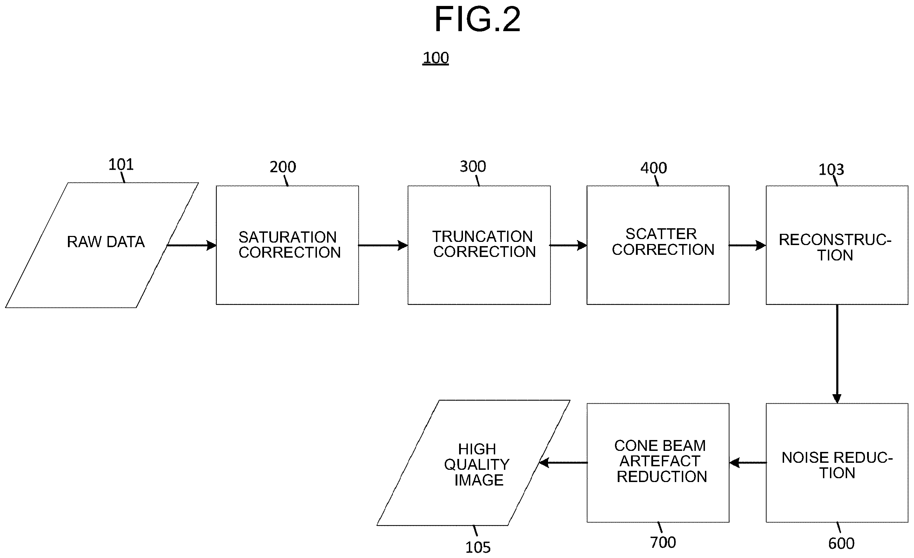

Referring now to the drawings, where like reference numerals designate identical or corresponding parts throughout the several views, FIG. 2 illustrates a method 100 for image reconstruction of a medical imaging apparatus-captured scan. For the sake of clarity, the medical imaging apparatus discussed will be a CBCT scanner, but it can be appreciated that other systems can also implement such techniques.

First, raw data 101 is collected by the CBCT scanner. This raw data 101 can be a projection dataset from a real scan of an object, such as a patient.

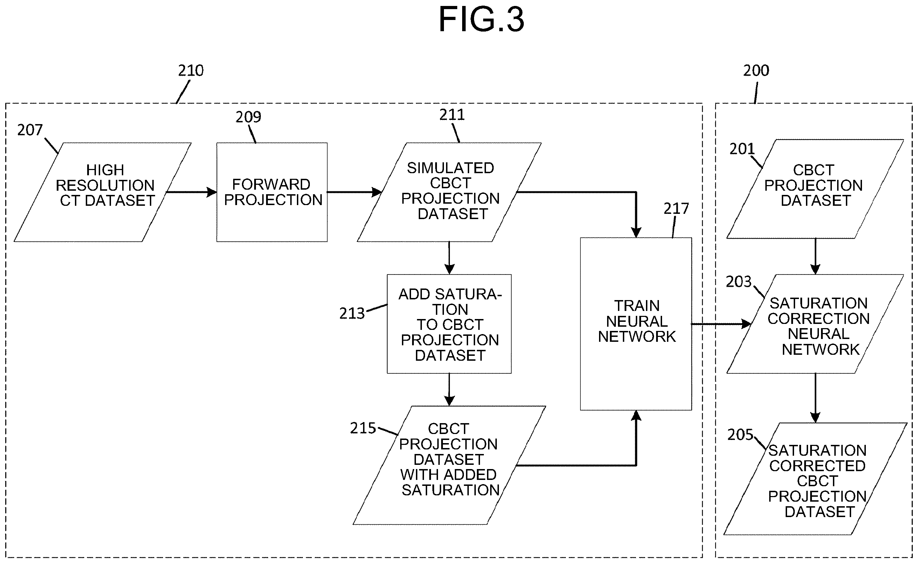

In step 200, the raw data 101 is corrected for saturation. The correction process includes utilizing a neural network that can take a CBCT projection dataset as input (e.g. raw data 101), and output a saturation corrected CBCT projection dataset. Additional details regarding step 200 and training such a neural network for saturation correction will be discussed later with reference to FIG. 3.

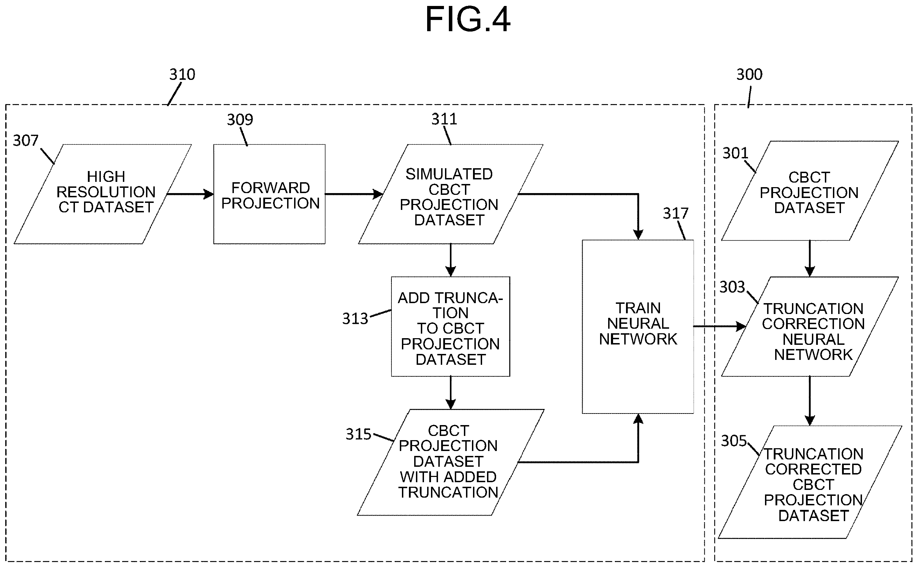

Next, the saturation corrected CBCT projection dataset from step 200 is corrected for truncation in step 300. Using a neural network, truncation correction in step 300 can take a CBCT projection dataset as input, and output a truncation corrected CBCT projection dataset. Additional details regarding step 300 and training such a neural network for truncation correction will be discussed later with reference to FIG. 4.

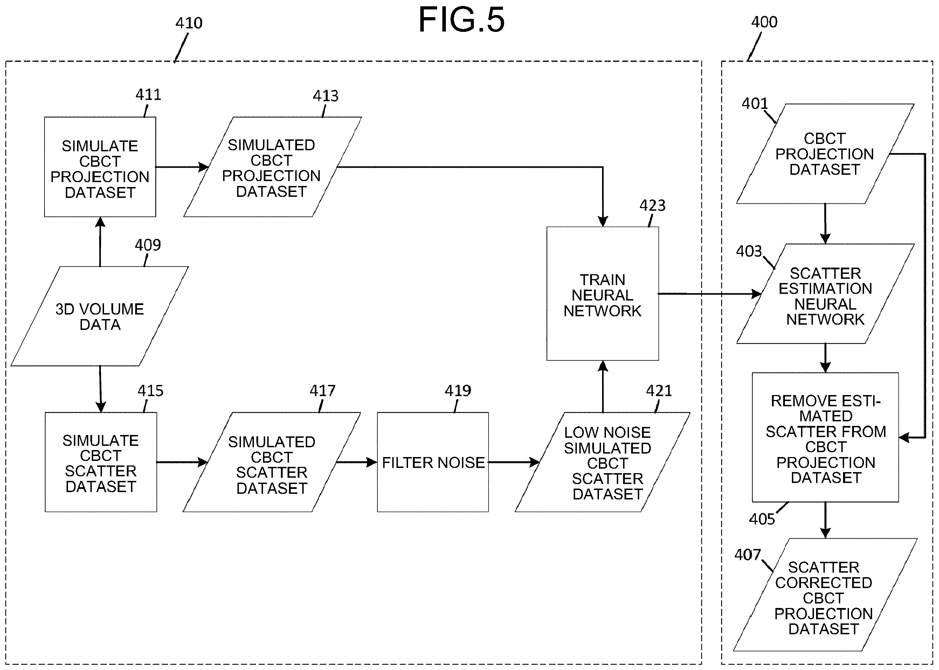

Next, the output from step 300 is used for scatter correction in step 400. As illustrated, step 400 is like the process of FIG. 1 but is augmented with additional details and is described specifically with respect to simulating CBCT-specific projection data and scatter data (although the techniques described herein are not limited to CBCT-specific techniques). Step 400 includes inputting a CBCT projection dataset into a neural network, estimating a scatter profile for the input CBCT projection dataset using the neural network, subtracting the estimated scatter profile from the input CBCT projection dataset, and generating a scatter corrected CBCT projection dataset. Additional details regarding step 400 and training such a neural network for scatter correction will be discussed later with reference to FIG. 5.

At this point, the raw data 101 has been corrected for saturation, truncation, and scatter in the projection domain. Next, reconstruction is performed in step 103 to transform the output of step 400 into a CBCT image. This reconstruction can be performed using any technique known by one of skill in the art, such as filtered back projection.

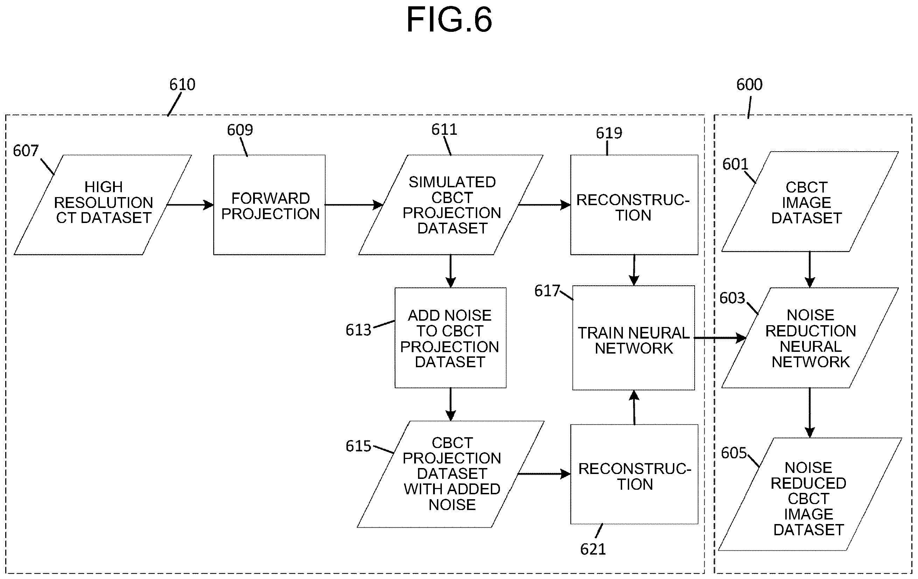

Next, the image reconstructed in step 103 is used for noise reduction in step 600. Step 600 includes inputting the reconstructed CBCT image into a neural network, and outputting the CBCT image with reduced noise as an output. Additional details regarding training such a neural network for noise reduction will be discussed later with reference to FIG. 6.

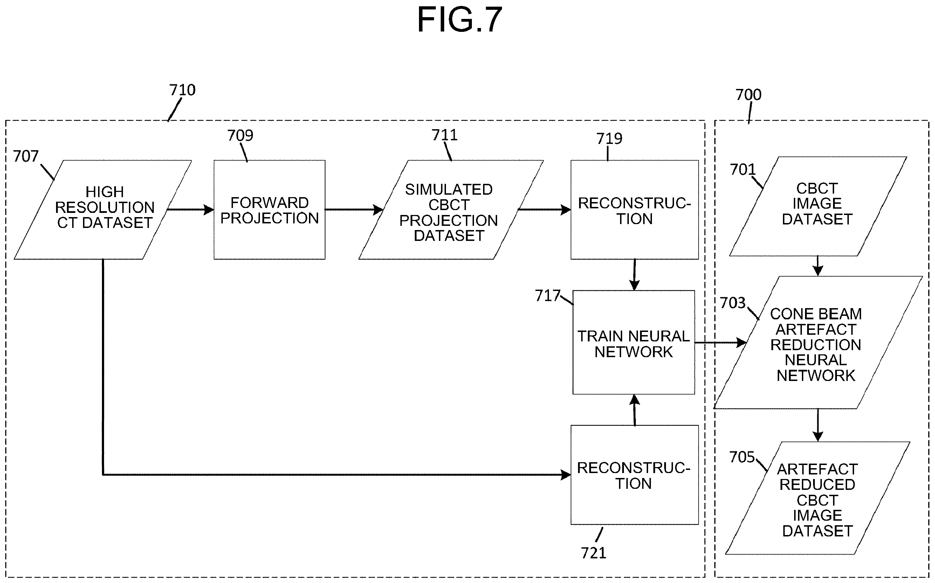

Next, the CBCT image with reduced noise is used for cone beam artefact reduction in step 700. Step 700 includes inputting the CBCT image with reduced noise generated from step 600 into a neural network, and outputting a CBCT image with reduced artefacts. Additional details regarding training such a neural network for artefact reduction will be discussed later with reference to FIG. 7.

Upon completion of steps 200, 300, 400, 103, 600, and 700, the raw data 101 has been transformed into a high quality image 105, which can be displayed for viewing. Compared to an image that could have been reconstructed directly from the raw data 101, the high quality image 105 has less saturation, truncation, scatter, noise, and artefacts.

As can be appreciated by one of skill in the art, the order of steps in method 100 can vary in other embodiments. In other embodiments for example, the order of steps 200, 300, and 400 can be in any combination. Similarly, in one embodiment, the order of steps 600 and 700 can be flipped. In another embodiment, steps 200, 300, 400, 600, and 700 do not all have to be performed, and one or more of these steps can be skipped.

FIG. 3 illustrates a workflow for training and utilizing a neural network for saturation correction, according to one embodiment. Method 210 illustrates the saturation correction training process. First, a high resolution CT (computed tomography) dataset 207 is obtained. The high resolution CT dataset 207 (or 120 in FIG. 1) can be obtained in a variety of ways, such as scanning a patient in a CT scanner. Alternatively, a high resolution CT dataset may be created by simulating a digital phantom that is converted to 3D volume data that can be processed as if it were acquired 3D data.

The high resolution CT dataset 207 is then forward projected in step 209 to generate a simulated CBCT projection dataset 211. The forward projection can transform CT datasets in the image domain into CBCT datasets in the projection domain. Any forward projection technique known by one of skill in the art can be used. The use of a high resolution CT dataset rather than a low resolution CT dataset allows the forward projected CBCT projection dataset to also be of high resolution.

Saturation is added (e.g. via simulation) to the CBCT projection dataset 211 in step 213 to generate a CBCT projection dataset with added saturation 215. Varying levels of saturation can be added to create training pairs spanning a wide range of saturation levels. The simulated CBCT projection data 211 can be clipped at a specific threshold to simulate the saturation effect. Thereafter, the simulated CBCT projection dataset 211 is used as target learning data, and the CBCT projection dataset with added saturation 215 is used as input learning data for training a neural network in step 217. After a neural network has been sufficiently trained (e.g. met stopping criteria) in step 217, a saturation correction neural network 203 is generated.

This saturation correction neural network 203 can be used in the saturation correction of step 200 in method 100. During saturation correction in step 200, a CBCT projection dataset 201 is obtained. The CBCT projection dataset 201 can be obtained from a real scan of an object by a CBCT scanner, according to one embodiment. In connection to method 100, the CBCT projection dataset 201 is the raw data 101. Thereafter, the CBCT projection dataset 201 is input into the saturation correction neural network 203 for producing a saturation corrected CBCT projection dataset 205.

FIG. 4 illustrates a workflow for training and utilizing a neural network for truncation correction, according to one embodiment. Method 310 illustrates the truncation correction training process. First, a high resolution CT dataset 307 is obtained. The high resolution CT dataset 307 can be obtained in a variety of ways, such as scanning a patient in a CT scanner, or simulating a digital phantom.

The high resolution CT dataset 307 is then forward projected in step 309 to generate a simulated CBCT projection dataset 311. The forward projection can transform CT datasets in the projection domain into CBCT datasets in the projection domain. Any forward projection technique known by one of skill in the art can be used.

Truncation is added (e.g. via simulation) to the simulated CBCT projection dataset 311 in step 313 to generate a CBCT projection dataset with added truncation 315. Varying levels of truncation can be added via simulation. The center position of the simulated CBCT projection dataset 311 can be moved and padded to simulate truncation. Thereafter, the simulated CBCT projection dataset 311 is used as target learning data, and the CBCT projection dataset with added truncation 315 is used as input learning data for training a neural network in step 317. After a neural network has been sufficiently trained (e.g. met stopping criteria) in step 317, a truncation correction neural network 303 is generated.

This truncation correction neural network 303 can be used in the truncation correction of step 300 in method 100. During truncation correction in step 300, a CBCT projection dataset 301 is obtained. The CBCT projection dataset 301 can be obtained from a real scan of an object by a CBCT scanner, according to one embodiment. In connection to method 100, the CBCT projection dataset 301 is the projection dataset output from step 200 (i.e. saturation corrected CBCT projection dataset 205). The CBCT projection dataset 301 is input into the truncation correction neural network 303 for producing a truncation corrected CBCT projection dataset 305.

FIG. 5 illustrates a workflow for training and utilizing a neural network for scatter correction, according to one embodiment. Method 410 illustrates a training process for estimating scatter. First, 3D volume data 409 is obtained. The 3D volume data 409 can be acquired from phantoms and/or clinical sites. For example, the 3D volume data 409 can be clinical head data or abdomen data. This 3D volume data 409 can be used to generate synthetic pairs of projection and scatter datasets for training.

Step 411 is to simulate a CBCT projection data using the 3D volume data 409 to generate a simulated CBCT projection dataset 413. The simulated CBCT projection dataset 413 includes projection data as well as noise, and can be generated using Monte Carlo techniques (e.g. GEANT4) and/or radiative transfer equation (RTE) techniques. In one embodiment for using Monte Carlo techniques to generate a simulated dataset, less detector pixels can be used to reduce the photon numbers used. In another embodiment for using Monte Carlo techniques, the geometry is identical to a real set up and a one-directional anti-scatter grid is included.

Step 415 is to simulate a CBCT scatter dataset using the 3D volume data 409 to generate a simulated CBCT scatter dataset 417. The simulated CBCT scatter dataset 417 indicates a scatter profile from the 3D volume data 409, and can be generated using Monte Carlo techniques (e.g. GEANT4) and/or radiative transfer equation (RTE) techniques. Furthermore, the simulated CBCT scatter dataset 417 can be filtered using proper filters (e.g. strong Gaussian filter) in step 419 to remove noise and generate a smooth simulated CBCT scatter dataset 421. The filters can be applied because scatter profiles change slowly along space, and are not sensitive to small details in a phantom or patient. The primary projection remains the same, while the low frequency scatter profile can be smoothed.

In step 423, a neural network is trained using the simulated CBCT projection dataset 413 as input learning data, and the smooth simulated CBCT scatter dataset 421 as target learning data. The neural network can include a modified U-net structure, whose complexity can be tuned depending on complexity of the training data. The output of step 423 is a scatter estimation neural network 403, which can estimate the scatter profile of a projection dataset input.

The scatter estimation neural network 403 can be used in the scatter correction of step 400 in method 100. During scatter correction in step 400, a CBCT projection dataset 401 is obtained. The CBCT projection dataset 401 can be obtained from a real scan of an object by a CBCT scanner, according to one embodiment. In connection to method 100, the CBCT projection dataset 401 is the projection dataset output from step 300 (i.e. truncation corrected CBCT projection dataset 305). Thereafter, the CBCT projection dataset 401 is input into the scatter estimation neural network 403 for producing an estimated scatter profile of the CBCT projection dataset 401.

In step 405, the scatter estimated from the scatter estimation neural network 403 is removed (subtracted) from the CBCT projection dataset 401 to generate a scatter corrected CBCT projection dataset 407. In a case where there was a downsizing process of the detector pixels prior to inferencing, an upsizing process can be performed after the inferencing (e.g. after step 403 and before step 405).

Note that in some cases, raw datasets acquired in clinical cases are large (e.g. of size 1024 by 1024). Because there can be limitations on the number of photons used in the simulating, a smaller size simulated data (e.g. 256 by 256) can be used for training. In such a scenario, a pre-prediction downsize and post-prediction upsize can be included. The data to be predicted also can be scaled to a proper intensity level (i.e. similar intensity level of the simulated dataset used in training).

In another embodiment, scatter correction can be performed in the image domain or sinogram domain rather than in the projection domain. In such a case, a simulated reconstructed image or sinogram without scatter can be used as target learning data and a reconstructed image or sinogram with scatter can be used as the input learning data.

FIG. 6 illustrates a workflow for training and utilizing a neural network for noise reduction, according to one embodiment. Method 610 illustrates a training process for the noise reduction neural network. First, a high resolution CT dataset 607 is obtained. The high resolution CT dataset 607 can be obtained in a variety of ways, such as scanning a patient in a CT scanner, or simulating a digital phantom.

The high resolution CT dataset 607 is then forward projected in step 609 to generate a simulated CBCT projection dataset 611. The forward projection can transform CT datasets in the projection domain into CBCT datasets in the projection domain. Any forward projection technique known by one of skill in the art can be used.

Noise is added (e.g. via simulation) to the simulated CBCT projection dataset 611 in step 613 to generate a CBCT projection dataset with added noise 615. Thereafter, the simulated CBCT projection dataset 611 is reconstructed into an image in step 619 and used as target learning data, while the CBCT projection dataset with added noise 615 is reconstructed into an image in step 621 and used as input learning data for training a neural network in step 617. After a neural network has been sufficiently trained (e.g. met stopping criteria) in step 617, a noise reduction neural network 603 is generated.

The noise reduction neural network 603 can be used for noise reduction in step 600 of method 100. During noise reduction in step 600, a CBCT image dataset 601 is obtained. The CBCT image dataset 601 is in the image domain and can be obtained from a real scan of an object by a CBCT scanner, according to one embodiment. In connection to method 100, the CBCT image dataset 601 is the output of step 103 (i.e. reconstructed scatter corrected CBCT projection dataset 407). Thereafter, the CBCT image dataset 601 is input into the noise reduction neural network 603 for producing a noise reduced CBCT image dataset 605.

The training pairs can be generated at different dose levels. In one embodiment, the range of dose levels can be based on the dose levels most commonly used in clinical settings.

FIG. 7 illustrates a workflow for training and utilizing a neural network for cone beam artefact reduction, according to one embodiment. Method 710 illustrates a training process for the artefact reduction. First, a high resolution CT dataset 707 is obtained. The high resolution CT dataset 707 can be obtained in a variety of ways, such as scanning a patient in a CT scanner, or simulating a digital phantom.

The high resolution CT dataset 707 is then forward projected in step 709 to generate a simulated CBCT projection dataset 711. The forward projection can transform CT datasets in the projection domain into CBCT datasets in the projection domain. Any forward projection technique known by one of skill in the art can be used.

The simulated CBCT projection dataset 711 is reconstructed in step 719 to generate an image, which is used as input learning data for training a neural network in step 717. The high resolution CT dataset 707 is reconstructed to form in image in step 721, where the reconstructed image is then used as target learning data during training in step 717. The output of step 717 is a cone beam artefact reduction neural network 703 that can correct cone beam artefacts.

The cone beam artefact reduction neural network 703 can be used for artefact reduction in step 700 of method 100. During cone beam artefact reduction in step 700, a CBCT image dataset 701 is obtained. The CBCT image dataset 701 is in the image domain and can be obtained from a real scan of an object by a CBCT scanner, according to one embodiment. In connection to method 100, the CBCT image dataset 701 is output of step 600 (i.e. noise reduced CBCT image dataset 605). Thereafter, the CBCT image dataset 701 is input into the cone beam artefact reduction neural network 703 for producing an artefact reduced CBCT image dataset 705.

In an embodiment, a set of neural networks for training saturation, truncation, and scatter can be one neural network, two neural networks, or three neural networks. For example, one neural network can perform all three of saturation, truncation, and scatter correction. Alternatively, a first neural network can correct for saturation, a second neural network can correct for truncation, and a third neural network can correct for scatter. Alternatively, a first neural network can correct for one of saturation, truncation, or scatter, and a second NN can correct for the remaining two. The same concept applies to a set of neural networks trained for noise reduction and cone beam artefact reduction, where one or two neural networks can be used. In other words, each of saturation correction, truncation correction, scatter correction, noise reduction, and artefact reduction do not have to be performed using individual neural networks.

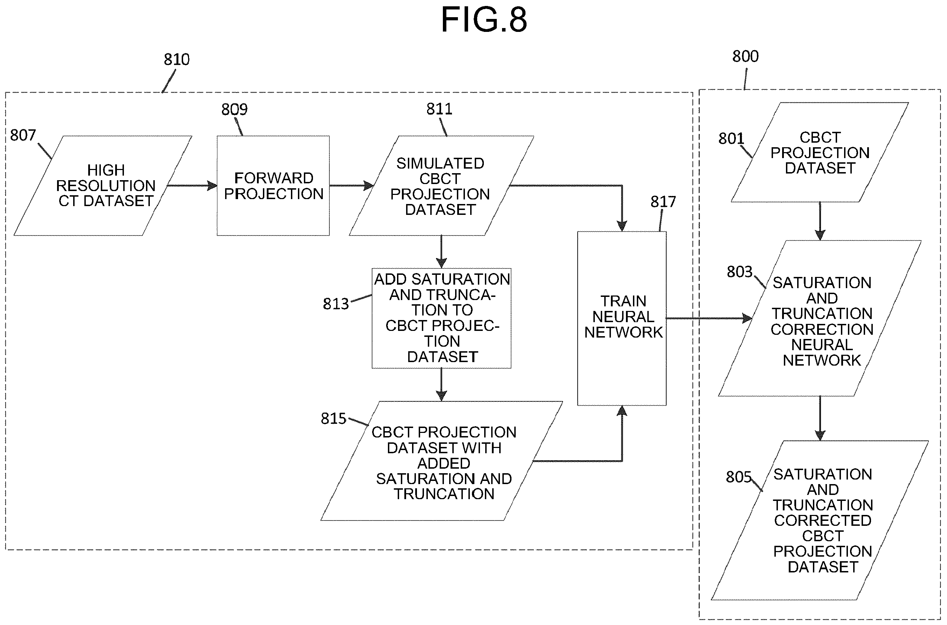

As another example, training data can be altered to decrease the number of trained neural networks. For example, as shown in FIG. 8, one neural network can be used for saturation and truncation correction. Method 810 illustrates the combined saturation and truncation correction training process. First, a high resolution CT dataset 807 is obtained. The high resolution CT dataset 807 can be obtained in a variety of ways, such as scanning a patient in a CT scanner, or simulating a digital phantom.

The high resolution CT dataset 807 is then forward projected in step 809 to generate a simulated CBCT projection dataset 811. The forward projection can transform CT datasets in the projection domain into CBCT datasets in the projection domain. Any forward projection technique known by one of skill in the art can be used.

Saturation and truncation is added (e.g. via simulation) to the simulated CBCT projection data 811 in step 813 to generate a CBCT projection dataset with added saturation and truncation 815. Simulated saturation and truncation can be added using the same techniques as discussed in steps 213 and 313 of methods 210 and 310, respectively. Thereafter, the simulated CBCT projection dataset 811 is used as target learning data, and the CBCT projection dataset with added saturation and truncation 815 is used as input learning data for training a neural network in step 817. After a neural network has been sufficiently trained (e.g. met stopping criteria) in step 817, a saturation and truncation correction neural network 803 is generated.

This saturation and truncation correction neural network 803 can be used for combined saturation and truncation correction in step 800. During step 800, a CBCT projection dataset 801 is obtained. The CBCT projection dataset 801 can be obtained from a real scan of an object by a CBCT scanner, according to one embodiment. Thereafter, the CBCT projection dataset 801 is input into the saturation and truncation correction neural network 803 for producing a saturation and truncation corrected CBCT projection dataset 805. In relation to method 100, steps 800/810 can be performed instead of steps 200/210 and 300/310, and can be performed before or after step 400.

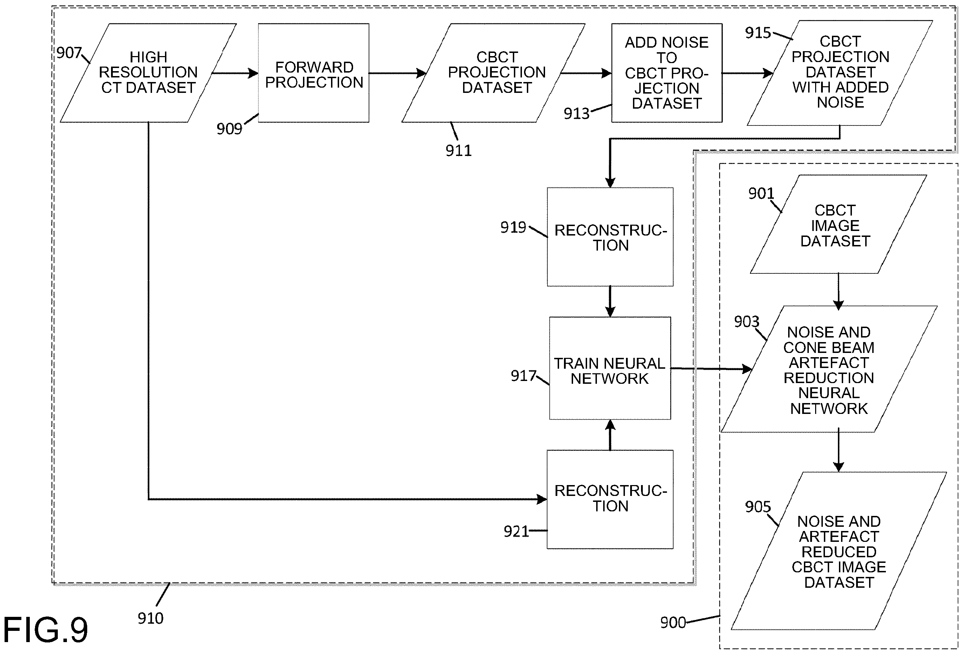

As another example of altering the training data to decrease the number of trained neural networks, FIG. 9 shows a workflow for generating one neural network that can perform noise and artefact reduction.

Method 910 shows the combined noise and cone beam artefact reduction training process. First, a high resolution CT dataset 907 is obtained. The high resolution CT dataset 907 can be obtained in a variety of ways, such as scanning a patient in a CT scanner, or simulating a digital phantom.

The high resolution CT dataset 907 is then forward projected in step 909 to generate a CBCT projection dataset 911. The forward projection can transform CT datasets in the projection domain into CBCT datasets in the projection domain. Any forward projection technique known by one of skill in the art can be used.

In step 913, noise is added (e.g. via simulation) to the CBCT projection dataset 911 to generate a CBCT projection dataset with added noise 915. The CBCT projection dataset with added noise 915 is reconstructed in step 919 to form an image, which is used as input learning data for training a neural network in step 917.

In step 921, the high resolution CT dataset 907 is reconstructed to form an image, which is used as target learning data for training a neural network in step 917. Once step 917 is complete, the result is a noise and cone beam artefact reduction neural network 903.

This noise and cone beam artefact reduction neural network 903 can be used for combined noise and cone beam artefact reduction in step 900. During step 900, a CBCT image dataset 901 is obtained. The CBCT image dataset 901 can be obtained from a real scan of an object by a CBCT scanner, according to one embodiment. Thereafter, the CBCT image dataset 901 is input into the noise and cone beam artefact reduction neural network 903 for producing a noise and artefact reduced CBCT image dataset 905. In relation to method 100, steps 900/910 can be performed instead of steps 600/610 and 700/710.

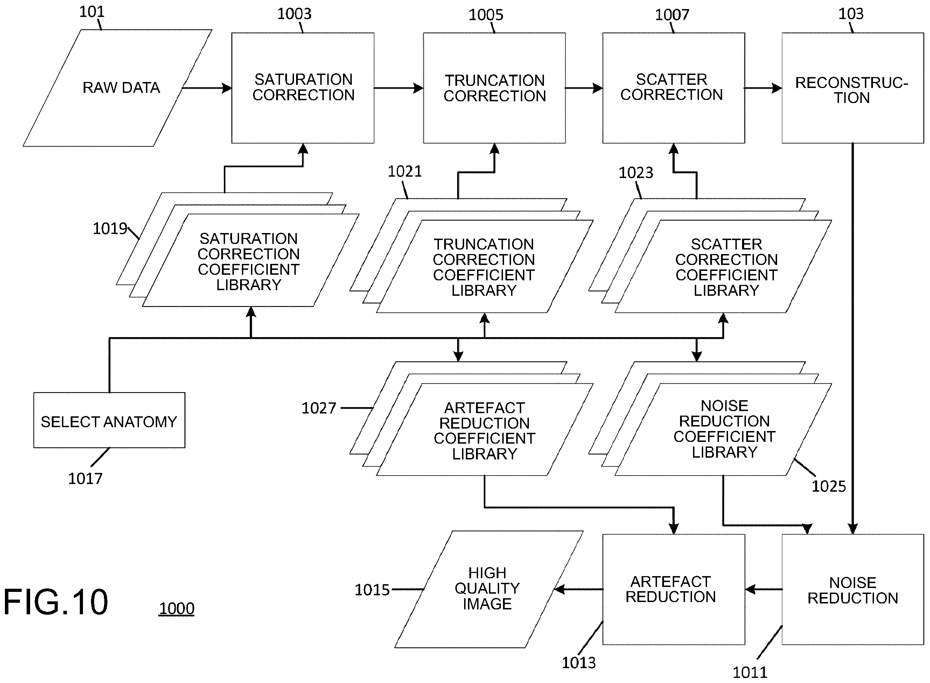

In another embodiment, to better capture and represent the image features corresponding to different anatomic structures and/or clinical applications information related to one or more anatomies of interest, tailored optimization strategies and cost functions can be utilized. For example, utilizing anatomy data, which indicates the particular anatomy being imaged (e.g. head, abdomen, lung, cardiac), a neural network's coefficients can be chosen from a library of coefficients. Method 1000 in FIG. 10 illustrates an example. Method 1000 is related to method 100, but differs in a few key aspects, which will be clear following the below discussion.

First, raw data 101 is obtained, as was the case in method 100. Unlike method 100, the anatomy represented by the raw data 101 is then selected (i.e. made known) in step 1017. For example, if the raw data 101 represents a scan of a patient's head, a head is selected as the anatomy in step 1017. This selected anatomy data is then used to choose the coefficients of the neural networks used in saturation correction of step 1003, truncation correction of step 1005, scatter correction of step 1007, noise reduction of step 1011, and/or artefact reduction of step 1013 using a saturation correction coefficient library 1019, truncation correction coefficient library 1021, scatter correction coefficient library 1023, noise reduction coefficient library 1025, and/or artefact reduction coefficient library 1027, respectively. The final step of method 1000 is generating a high quality image 1015.

Each of the coefficient libraries 1019, 1021, 1023, 1025, and 1027 can be created using training data categorized based on anatomical structure. For example, the saturation correction coefficient library 1019 to be used in step 1003 for saturation correction can be created using method 210, but with training data images of heads to create a first set of coefficients in the saturation correction coefficient library 1019, and images of abdomens to create second set of coefficients in the saturation correction coefficient library 1019. If the selected anatomy in step 1017 is a head, the first set of coefficients can be used in the neural network for saturation correction in step 1003; if the selected anatomy in step 1017 is an abdomen, the second set of coefficients can be used. Furthermore, in the case that the anatomy selected in step 1017 does not have a set of coefficients, a default set of coefficients can be used.

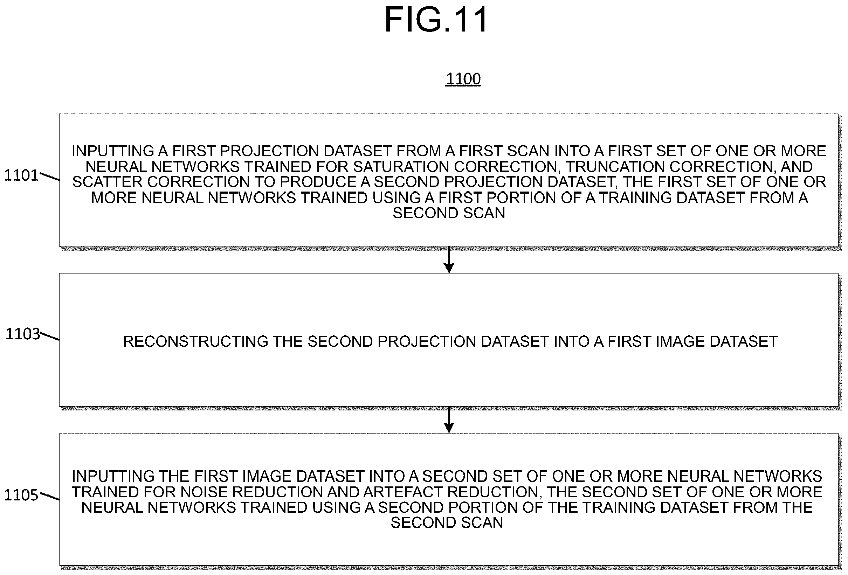

FIG. 11 is a flowchart of another method 1100, according to one embodiment of the present disclosure. The first step 1101 is inputting a first projection dataset from a first scan into a first set of one or more neural networks trained for saturation correction, truncation correction, and scatter correction to produce a second projection dataset, the first set of one or more neural networks trained using a first portion of a training dataset from a second scan.

In one embodiment, the first portion of the training dataset can include a high quality CBCT projection dataset, the high quality CBCT projection dataset with added saturation, the high quality CBCT projection dataset with added truncation, a simulated projection dataset, and/or a simulated scatter dataset for training the first set of one or more neural networks. Furthermore, the first scan can be a CBCT scan.

In another embodiment of step 1101, the one or more neural networks is three. When there are three neural networks, a first neural network can be trained for saturation correction using the high quality CBCT projection dataset an target learning data and the high quality CBCT projection dataset with added saturation as input learning data, a second neural network can be trained for truncation correction using the high quality CBCT projection dataset as target learning data and the high quality CBCT projection dataset with added truncation as input learning data, and a third neural network can be trained for estimating scatter profiles for use in the scatter correction using the simulated scatter dataset as target learning data and the simulated scatter dataset (with or without noise removed) as input learning data.

In another embodiment of step 1101, the one or more neural networks is two. When there are two neural networks, a first neural network can be trained for one of saturation correction, truncation correction, or scatter correction, and the second neural network can be trained for the remaining two corrections.

In another embodiment of step 1101, the one or more neural networks is one. When there is one neural network, the one neural network is trained for saturation correction, truncation correction, and scatter correction.

When less than three neural networks are being used, training the less than three neural networks can be done by altering the first portion of the training dataset. One neural network can be trained using high and low quality training pairs, where the target learning data has less saturation, truncation, and scatter than the corresponding input learning data.

As an example of altering the first portion of the training dataset, the first portion of the training dataset can include the high quality CBCT projection dataset and the high quality CBCT projection dataset with at least two of added saturation, truncation, or scatter for training a neural network.

Step 1103 of method 1100 is reconstructing the second projection dataset (in the projection domain) into a first image dataset (in the image domain). In one embodiment, filtered back projection can be performed.

Step 1105 is inputting the first image dataset into a second set of one or more neural networks trained for noise reduction and artefact reduction, the second set of one or more neural networks trained using a second portion of the training dataset from the second scan.

In one embodiment of step 1105, the second portion of the training dataset can include a high quality CBCT image dataset based on the second scan, the high quality CBCT image dataset with added noise, and/or a high quality CT image dataset based on the second scan.

In one embodiment of step 1105, the one or more neural networks in the second set is two. A first neural network in the second set is trained for noise reduction using the high quality CBCT image dataset based on the second scan as target training data and the high quality CBCT image dataset with added noise as the input training data. The second neural network in the second set is trained for cone beam artefact reduction using the high quality CT image dataset as target training data and the CBCT image dataset based on the second scan as input learning data.

In one embodiment of step 1105, the one or more neural networks in one.

One embodiment of method 1100 further comprises displaying an output from the second set of one neural networks via a display unit.

In another embodiment of method 1100, the second scan can be a real scan performed by a medical image processing apparatus (e.g. CT scanner). In another embodiment of method 1100, the second scan can be performed via simulation.

In another embodiment of method 1100, the first scan that generates the first projection dataset is a CBCT scan.

In another embodiment of method 1100, the second scan is a CT scan. The CT scan can generate a CT projection dataset. This CT projection dataset can be transformed into a CBCT projection using forward projection.

One embodiment of method 1100 further comprises receiving anatomy data related to the anatomy being scanned in the first scan, and selecting coefficients for the first set and the second set of one or more neural networks from a library of coefficients based on the anatomy data.

FIG. 12 shows a schematic of an implementation of a CT scanner according to an embodiment of the disclosure. The CT scanner shown in FIG. 12 performs a CT scan that is a second scan. In other words, the CT scanner shown in FIG. 12 is an example of the second radiation imaging apparatus.

Referring to FIG. 12, a radiography gantry 500 is illustrated from a side view and further includes an X-ray tube 501, an annular frame 502, and a multi-row or two-dimensional-array-type X-ray detector 503. The X-ray tube 501 and X-ray detector 503 are diametrically mounted across an object OBJ on the annular frame 502, which is rotatably supported around a rotation axis RA (or an axis of rotation). A rotating unit 507 rotates the annular frame 502 at a high speed, such as 0.4 sec/rotation, while the subject S is being moved along the axis RA into or out of the illustrated page.

X-ray CT apparatuses include various types of apparatuses, e.g., a rotate/rotate-type apparatus in which an X-ray tube and X-ray detector rotate together around an object to be examined, and a stationary/rotate-type apparatus in which many detection elements are arrayed in the form of a ring or plane, and only an X-ray tube rotates around an object to be examined. The present disclosure can be applied to either type. The rotate/rotate type will be used as an example for purposes of clarity.

The CT apparatus further includes a high voltage generator 509 that generates a tube voltage applied to the X-ray tube 501 through a slip ring 508 so that the X-ray tube 501 generates X-rays (e.g. cone beam X-ray). The X-rays are emitted towards the subject S, whose cross sectional area is represented by a circle. For example, the X-ray tube 501 having an average X-ray energy during a first scan that is less than an average X-ray energy during a second scan.

Thus, two or more scans can be obtained corresponding to different X-ray energies. The X-ray detector 503 is located at an opposite side from the X-ray tube 501 across the object OBJ for detecting the emitted X-rays that have transmitted through the object OBJ. The X-ray detector 503 further includes individual detector elements or units.

The CT apparatus further includes other devices for processing the detected signals from X-ray detector 503. A data acquisition circuit or a Data Acquisition System (DAS) 504 converts a signal output from the X-ray detector 503 for each channel into a voltage signal, amplifies the signal, and further converts the signal into a digital signal. The X-ray detector 503 and the DAS 504 are configured to handle a predetermined total number of projections per rotation (TPPR) .

The above-described data is sent to a preprocessing device 506, which is housed in a console outside the radiography gantry 500 through a non-contact data transmitter 505. The preprocessing device 506 performs certain corrections, such as sensitivity correction on the raw data. A memory 512 stores the resultant data, which is also called projection data at a stage immediately before reconstruction processing. The memory 512 is connected to a system controller 510 through a data/control bus 511, together with a reconstruction device 514, input device 515, and display 516. The system controller 510 controls a current regulator 513 that limits the current to a level sufficient for driving the CT system.

The detectors are rotated and/or fixed with respect to the patient among various generations of the CT scanner systems. In one implementation, the above-described CT system can be an example of a combined third-generation geometry and fourth-generation geometry system. In the third-generation system, the X-ray tube 501 and the X-ray detector 503 are diametrically mounted on the annular frame 502 and are rotated around the object OBJ as the annular frame 502 is rotated about the rotation axis RA. In the fourth-generation geometry system, the detectors are fixedly placed around the patient and an X-ray tube rotates around the patient. In an alternative embodiment, the radiography gantry 500 has multiple detectors arranged on the annular frame 502, which is supported by a C-arm and a stand.

The memory 512 can store the measurement value representative of the irradiance of the X-rays at the X-ray detector unit 503. Further, the memory 512 can store a dedicated program for executing, for example, various steps of the methods and workflows discussed herein.

The reconstruction device 514 can execute various steps of the methods/workflows discussed herein. Further, reconstruction device 514 can execute pre-reconstruction processing image processing such as volume rendering processing and image difference processing as needed.

The pre-reconstruction processing of the projection data performed by the preprocessing device 506 can include correcting for detector calibrations, detector nonlinearities, and polar effects, for example.

Post-reconstruction processing performed by the reconstruction device 514 can include filtering and smoothing the image, volume rendering processing, and image difference processing as needed. The image reconstruction process can implement various of the steps of methods discussed herein in addition to various CT image reconstruction methods. The reconstruction device 514 can use the memory to store, e.g., projection data, reconstructed images, calibration data and parameters, and computer programs.

The reconstruction device 514 can include a CPU (processing circuitry) that can be implemented as discrete logic gates, as an Application Specific Integrated Circuit (ASIC), a Field Programmable Gate Array (FPGA) or other Complex Programmable Logic Device (CPLD). An FPGA or CPLD implementation may be coded in VHDL, Verilog, or any other hardware description language and the code may be stored in an electronic memory directly within the FPGA or CPLD, or as a separate electronic memory. Further, the memory 512 can be non-volatile, such as ROM, EPROM, EEPROM or FLASH memory.

The memory 512 can also be volatile, such as static or dynamic RAM, and a processor, such as a microcontroller or microprocessor, can be provided to manage the electronic memory as well as the interaction between the FPGA or CPLD and the memory.

Alternatively, the CPU in the reconstruction device 514 can execute a computer program including a set of computer-readable instructions that perform the functions described herein, the program being stored in any of the above-described non-transitory electronic memories and/or a hard disk drive, CD, DVD, FLASH drive or any other known storage media. Further, the computer-readable instructions may be provided as a utility application, background daemon, or component of an operating system, or combination thereof, executing in conjunction with a processor, such as a Xenon processor from Intel of America or an Opteron processor from AMD of America and an operating system, such as Microsoft VISTA, UNIX, Solaris, LINUX, Apple, MAC-OS and other operating systems known to those skilled in the art. Further, CPU can be implemented as multiple processors cooperatively working in parallel to perform the instructions.

In one implementation, the reconstructed images can be displayed on a display 516. The display 516 can be an LCD display, CRT display, plasma display, OLED, LED or any other display known in the art.

The memory 512 can be a hard disk drive, CD-ROM drive, DVD drive, FLASH drive, RAM, ROM or any other electronic storage known in the art.

It can be appreciated that the CT scanner discussed above with respect to FIG. 12 can also be configured as a CBCT scanner, where the imaging beam is cone shaped (rather than fan shaped).

FIG. 13 shows a schematic picture of an embodiment of an X-ray diagnosis apparatus according to an embodiment of the present disclosure. The X-ray diagnosis apparatus as shown in FIG. 13, performs, for example, a CBCT scan that is a first scan. In other words, the X-ray diagnosis apparatus as illustrated in FIG. 13 is an example of a first radiation imaging apparatus that performs a first scan. The targeted image data acquired by the first radiation imaging apparatus, which is applied to the trained machine learning model, is image data corresponding to an image obtained by reconstructing a projection data acquired by rotating a C-arm by an X-ray diagnosis apparatus.

FIG. 13 illustrates an X-ray angiography apparatus comprising a C-arm 1304 as an example of an X-ray diagnosis apparatus 1300. The X-ray diagnosis apparatus 1300 comprises an X-ray high-voltage apparatus 1301, an X-ray generator 1302, X-ray detectors 1303, a C-arm 1304, a bed 1305, an input interface 1306, a display 1307, a memory 1308 and processing circuitry 1309.

The X-ray high-voltage apparatus 1301 applies high-voltage to the X-ray tube which the X-ray generator 1302 comprise. The X-ray generator 1302 comprise, for example, an X-ray tube and an X-ray beam limiting device and generates an X-ray to irradiate the patient P. The X-ray detector 1303 is, for example, a FPD (Flat Panel Detector) including detection elements arrayed in a matrix shape. The X-ray detector 1303 detects an X-ray irradiated from the X-ray generator 1302 and penetrating the patient P. The X-ray detector outputs the detection signal corresponding to the detected amount of X-ray to the processing circuitry 1309.

The C-arm 1304 keeps the X-ray generator 1302 and X-ray detector 1303 while they are in the opposite position sandwiching the patient P therebetween. For example, the C-arm 1304 has driving mechanism such as motors or actuators. By applying driving voltage to the driving mechanism in accordance with control signals received from the processing circuitry 1309, the C-arm 1304 rotates and slides the X-ray generator 1302 and the X-ray detector 1303 relative to the patient P and controls the radiation position or radiation angle of the X-ray.

The bed 1305 is a bed comprises a couchtop that places the patient P thereon. The input device 1306, the display 1307 and the memory 1308 may be constructed in the similar manner as the input device 515, the display 516 and the memory 512 of FIG. 12. It is noted that the display 1307 may be constructed such that the display 307 is kept by the arm and the position and angle of the display 307 are controlled. In this case, the display 22 is included in an example of an object capable of moving in the examination room.

The processing circuitry 1309 controls the overall operation of the X-ray diagnosis apparatus. In the X-ray diagnosis apparatus 1300, each processing function is stored in the memory 1308 in the form of computer-executable programs. The processing circuitry 1309 is a processor realizing functions corresponding to each program by reading the programs from the memory 1308 and executing the programs. In other words, the processing circuitry 1309 in the state of having reading out the programs has the functions corresponding to the programs that have been read out.

It has been explained that single processing circuitry 1309 realizes each function included in the processing circuitry 1309. However, it is possible that a plurality of independent processors are combined to form the processing circuitry 1309 and each processor executes the program to realize the function.

According to at least one embodiment as explained above, it is possible to improve image quality.

While certain implementations have been described, these implementations have been presented by way of example only, and are not intended to limit the teachings of this disclosure. Indeed, the novel methods, apparatuses and systems described herein may be embodied in a variety of other forms; furthermore, various omissions, substitutions and changes in the form of the methods, apparatuses and systems described herein may be made without departing from the scope of the invention as claimed.

## Claims

1. A medical image processing method of applying an X-ray image data (101) acquired by a first radiation apparatus (1300) to a trained machine learning model, and outputting a high-quality X-ray image data (105) as a processed image, the machine learning model being generated by
acquiring, based on 3D data (409) acquired by using a second radiation imaging apparatus (500), simulated projection image data (413) representative of when a object is imaged by the first radiation apparatus (1300) and the simulated data with degraded image quality, and
applying a training process to an untrained machine learning model to produce the trained machine learning model by using the simulated projection data (413) and the simulated data with degraded image quality, wherein
the first radiation apparatus is an X-ray diagnosis apparatus comprising a C-arm, and
the second radiation apparatus is a CT (Computed Tomography) apparatus.

2. The method according to claim 1, wherein the simulated data with degraded image quality is simulated scatter data (421) representative of when the object is imaged by the first radiation apparatus (500), the simulated data with degraded image quality being generated based on the 3D training data (409).

3. The method according to claim 1 or 2, further comprising:
applying the X-ray image data as an input to the trained machine learning model,
acquiring scatter data of the X-ray image data as an output
subtracting the scatter data from the X-ray image data to generate scatter corrected projection image data.

4. The method according to any one of claims 1 to 3, wherein applying the X-ray image data (101) to the trained machine learning model comprises:
applying saturation correction (203) to the X-ray image data (101) to produce pre-processed image data (205); and
applying the pre-processed image data (205) to the trained machine learning model.

5. The method according to any one of claims 1 to 4, wherein applying the X-ray image data (101) to the trained machine learning model comprises:
applying truncation correction (303) to the X-ray image data (101) to produce pre-processed image data (305); and
applying the pre-processed image data (305) to the trained machine learning model.

6. The method according to any one of claims 1 to 5, wherein applying the X-ray image data (101) to the trained machine learning model comprises applying the X-ray image data (101) to the trained machine learning model to produce scatter corrected projection data (407), the method further comprising:
performing reconstruction (103) on the scatter corrected projection data (407) to produce scatter corrected image data (601) .

7. The method according to claim 6, further comprising applying the scatter corrected image data (601) to at least one noise reducing neural network (603) to produce a noise reduced, scatter corrected image (605).

8. The method according to claim 6, wherein the method further comprising applying the scatter corrected image data (601) to at least one cone beam artefact reducing neural network (703) to produce an artefact reduced, scatter corrected image (705).

9. The method according to any one of claims 1 to 8, wherein the X-ray image data (101) is image data corresponding to an image obtained by reconstructing a projection data acquired by the X-ray diagnosis apparatus comprising the C-arm.

10. The method according to any one of claims 1 to 9, wherein simulation representative of when the object is imaged by the first radiation imaging apparatus is simulation simulating an imaging of the object by an imaging geometry of the first radiation imaging apparatus, by using Monte Carlo calculation or deterministic method of RTE(Radiative Transfer Equation).

11. A medical image processing apparatus comprising processing circuitry (1309) applying an X-ray image data (101) acquired by a first radiation imaging apparatus (1300) to a trained machine learning model and outputting a high-quality X-ray image data as a processed image , the trained machine learning model being generated by
acquiring, based on 3D data (409) acquired by using a second radiation imaging apparatus (500), simulated projection image data (413) representative of when a object is imaged by the first radiation apparatus (1300) and simulated data with degraded image quality representative of when imaged by the first radiation imaging apparatus, and
applying a training process to an untrained machine learning model to produce the trained machine learning model by using the simulated projection data (413) the simulated data with degraded image quality, wherein
the first radiation imaging apparatus is an X-ray diagnosis apparatus comprising a C-arm and
the second radiation imaging apparatus is an X-ray CT apparatus (Computed Tomography) apparatus.

12. A program configured to cause a computer to execute a process to apply an X-ray image data (101) acquired by a first radiation imaging apparatus (1300) to a trained machine learning model and to output a high-quality X-ray image data as a processed image, the trained machine learning model being generated by
acquiring, based on 3D data (409) acquired by using a second radiation imaging apparatus (500), simulated projection image data (413) representative of when a object is imaged by the first radiation apparatus (1300) and simulated data with degraded image quality representative of when imaged by the first radiation imaging apparatus, and
applying a training process to an untrained machine learning model to produce the trained machine learning model by using the simulated projection image data (413) and the simulated data with degraded image quality, wherein
the first radiation imaging apparatus is an X-ray diagnosis apparatus comprising a C-arm and
the second radiation imaging apparatus is an X-ray CT apparatus (Computed Tomography) apparatus.

13. A method for producing a trained machine learning model, the method comprising:
acquiring, based on 3D data (409) of an object acquired by using a second radiation imaging apparatus (500), simulated projection data (413) representative of when the object is imaged by a first radiation apparatus (1300) and simulated data with degraded image quality representative of when imaged by the first radiation imaging apparatus; and
training an untrained machine learning model to produce the trained machine learning model by using the simulated projection image data (413) and the simulated data with degraded image quality, wherein
the first radiation imaging apparatus is an X-ray diagnosis apparatus comprising a C-arm and
the second radiation imaging apparatus is an X-ray CT apparatus (Computed Tomography) apparatus.

14. An apparatus for producing a trained machine learning model, the apparatus comprising: processing circuitry configured to:
acquire, based on 3D training data (409) of an object acquired by using a second radiation imaging apparatus (500), simulated projection image data (413) representative of when the object is imaged by a first radiation apparatus (1300) and simulated data with degraded image quality representative of when imaged by the first radiation imaging apparatus; and
train an untrained machine learning model to produce the trained machine learning model by using the simulated projection image data (413) and the simulated data with degraded image quality, wherein
the first radiation imaging apparatus is an X-ray diagnosis apparatus comprising a C-arm and
the second radiation imaging apparatus is an X-ray CT apparatus (Computed Tomography) apparatus.

15. A computer-readable storage medium storing computer-readable instructions that, when executed by a computer, cause the computer to perform the methods of any one of claims 1 to 9 or 13.
